# EUROPÄISCHE PATENTANMELDUNG

(11) **EP 1 939 800 A1**
(43) Veröffentlichungstag der Anmeldung: **02.07.2008**
(21) Anmeldenummer: 07024207.8
(22) Anmeldetag: 13.12.2007
(51) Int. Cl.: G06Q 10/00

(54) **Produktionsflusssteuerung für eine Druckerei**

(30) Priorität: 22.12.2006 DE 102006061119
(71) Anmelder: MAN Roland Druckmaschinen AG, 63075 Offenbach (DE)
(72) Erfinder: Brandt, Andreas, 65207 Wiesbaden (DE); Schölzig, Jürgen, 55126 Mainz (DE); Walther, Thomas, 63067 Offenbach (DE)
(74) Vertreter: Stahl, Dietmar

(57) **Zusammenfassung**

Ein Verfahren zum prozessübergreifenden Transport von an Bedruckstoffe und Druckerzeugnisse gebundenen Daten soll den Bedruckstofftransport auf Transportpaletten in einer Bogen verarbeitenden Druckerei verbessern.
Dazu werden an den Transportpaletten dauerhaft oder lösbar Datenspeicher vorgesehen. In den Datenspeichern sind Logistikdaten und Verarbeitungsdaten von Bogendruckmaschine speicherbar, aktualisierbar und auslesbar.

## Beschreibung

Die Erfindung betrifft ein Produktionsflusssteuerungssystem für eine Druckerei.

In Druckereien wird es vielfach als wünschenswert erachtet, z.B. bei der Bogenverarbeitung, ein Managementsystem zu haben, das einen Produktionsfluss von der Wareneinlagerung, über den Druck und eventuell darauf folgende Weiterverarbeitungsschritte, die sich einem Druckprozess anschließen, abbildet.

Es ist aus vielen Anwendungen hinlänglich bekannt den Produktionsfluss im Produktlebenszyklus durch RFID-Transponder zu steuern, die an Paletten oder Behältern befestigt sind. Diese mobilen, an den Transportmitteln befestigten Datenträger haben vielerlei Vorteile. Eine automatische Identifikation des Produktes, sei es während oder vor der Produktion, im Lager oder bei der Distribution, trägt zu einer stark verbesserten Steuerungsfähigkeit der entsprechende Logistikprozesse bei. Ein gattungsmäßiger Vertreter solcher Logistiksysteme mit Datenspeicherung auf Transpondern und die dazu gehörigen Lese- und Schreibgeräte ist unter anderem in der DE 199 03 240 A1 offenbart.

Es muss dabei zwischen informationsorientierten und entscheidungsorientierten Systemen unterschieden werden. Erstere werden meist in der Literatur als so genannte Open-loop-Systeme, letztere als so genannte Closed-loop-Systeme bezeichnet. In einem Open-loop-System werden anhand der in der Logistik ausgeführten Operationen die dabei umgesetzten Produktivitäten nachvollzogen. Die Daten können über eine Messung an den Produkten erfolgen, deren Informationen abgerufen werden. Alle in diesem Zusammenhang ablaufenden Vorgänge können anschließend analysiert werden, um eine Systemperformance bestimmen zu können. Damit sind in der Regel die Möglichkeiten erschöpft, das System ist lediglich auf Informationen ausgelegt.

In den Open-loop-Systemen, die auch entscheidungsorientiert genannt werden, wird die gewonnene Information weiterverarbeitet, indem zusätzlich überprüft wird, ob und inwieweit die Zielperformance erreicht wird. Anhand der Resultate werden Entscheidungen getroffen und ausgeführt, welche die auszuführenden Operationen, falls nötig, im Hinblick auf die Zielperformance weiter optimieren.

Durch intelligente Systeme können also Durchlaufzeiten, Lagerbestände, Risken und Fehlerraten in einer Druckerei reduziert werden und gleichzeitig neue und flexiblere Produktionsansätze gewonnen werden.

Prinzipiell sind in solchen Systemen zwei Formen der Datenspeicherung auf einem Transponder zu unterscheiden: Entweder ist der Transponder Träger der gesamten benötigten Information oder der Transponder enthält nur eine ldentifikationsnummer, mit deren Hilfe die Informationen aus einer Datenbank abgerufen werden kann.

Die Logistik in einer Bogen verarbeitenden Druckerei ist unter anderem dadurch gekennzeichnet, dass ein Anlegerstapel einer Bogendruckmaschine von Hand oder mit einem Stapler eingesetzt wird. Ein entsprechender Auslegerstapel der gleichen Bogendruckmaschine kann entsprechend ebenfalls von Hand oder mittels eines Staplers entfernt werden. Es ist aber auch bekannt, die Bedruckstoffstapel automatisiert zu den Bogendruckmaschinen zu transportieren und sie z.B. mittels Rollenbahnen zu- und abzuführen. Es sind daher beliebige Kombinationen der Beladung mit Bedruckstoffstapeln und des Abtransports von Bedruckstoffstapeln an Bogendruckmaschinen denkbar.

Die DE 10 2005 009 301 A1 schlägt vor Bedruckstoff- und druckerzeugnisgebundene Daten bei der Herstellung und dem Vertrieb von Druckerzeugnissen in einem Datenspeicher abzulegen, der direkt mit dem Bedruckstoff verbunden ist. Der Datenspeicher kann dabei in den Bedruckstoff integriert oder mit diesem verbunden sein. Der Vorteil dieses Verfahrens liegt darin, dass einzelne Ereignisse, die den Bedruckstoff betreffen, auf diesem gespeichert werden können. Dagegen sprechen die hohen Kosten der Transponder, die sich nur für besonders hochwertige oder Druckprodukte mit einem hohen Sicherheitsanforderungsprofil rechnen. Für die Massenproduktion sind solche mit dem Bedruckstoff verbundene Datenspeicher ökonomisch nicht darstellbar. Ein weiterer Nachteil dieses Verfahrens ist es, dass der Druckbogen nicht in allen Fällen komplett bedruckt werden kann, da der Datenspeicher direkt mit dem Bedruckstoff verbunden ist.

Aufgabe der Erfindung ist es ein Produktionssteuerungssystem für eine Druckerei mit Bogenrotationsdruckmaschinen mit Stapelverarbeitung zu schaffen, das kostengünstig ist und dennoch alle Vorteile einer Produktionsflusssteuerung mit Datenspeicherung umfasst.

Gelöst wird diese erfindungsgemäße Aufgabe durch die kennzeichnenden Merkmale des Anspruches 1. Sinnvolle Weiterbildungen ergeben sich aus den Unteransprüchen.

Die Produktionsflusssteuerung soll erfindungsgemäß mit Hilfe von RFID-Transpondern erfolgen, die an den Transporthilfsmitteln für die Bogen bzw. die Bedruckstoffstapel angebracht sind.

Die Bedruckstofflogistik für Papier und Faltschachtelkarton erfolgt in Druckereien, die mit Bogenrotationsdruckmaschinen und Bogenstanzmaschinen arbeiten, palettenorientiert.
Die erfindungsgemäße Lösung schlägt daher vor, derartige Transportpaletten dauerhaft oder lösbar mit Transpondern zu bestücken, die mit geeigneten Schreibgeräten beschreibbar und / oder mit geeigneten Lesegeräten auslesbar sind.

Die Transponder können schon herstellerseitig bei dem Papierfabrikanten oder in der Druckerei an den Transportpaletten befestigt werden. Die Datenspeicher können entweder so groß gewählt werden, dass alle geforderten Datensätze auf dem Datenspeichers des Transponders abgelegt werden. Andererseits kann der Datenspeicher oder der Chip des Transponders auch eine eindeutige Identifikationsnummer tragen, mittels dessen auf einen in einem Datenbanksystem vorliegenden Datensatz zugegriffen werden kann.

Der Datensatz, der zu einem bestimmten einzelnen Bedruckstoffstapel zugehörig ist, kann im Wareneingang einer Druckerei oder bei dem Hersteller des Bedruckstoffes auf den Datenspeicher des Transponders oder in einer Datenbank abgelegt werden, die mit der ID-Kennung des Transponders verknüpft wird. In dem Datenspeicher oder dem Datensatz in der Datenbank können dann alle relevanten Bedruckstoffdaten, wie Format, Bedruckstoffdicke, Bedruckstoffgewicht, Bedruckstoffsorte, Bedruckstoffname, Herstellungsnummer und Herstellungsdatum abgelegt werden.

An einer Bogendruckmaschine werden ein Bogenanleger und gegebenenfalls eine mit diesem verbundene Bedruckstofflogistik mit Lesegeräten ausgestattet, die die auf dem Transponder befindlichen Daten auslesen oder über die ID-Kennung des Transponders aus einer Datenbank abrufen. Diese Datensätze werden dann an die Maschinensteuerung übergeben. Die Daten können nunmehr für die Voreinstellung von Maschinenelementen, wie z.B. Stellelementen im Bogenanleger, in der Bogenanlage oder in weiteren Elementen der Bogendruckmaschine genutzt werden. Beispielhaft sei hier nur die Formateinstellung des Bogenanlegers oder die Bedruckstoffdickeneinstellung der Druckwerke genannt.

Ein wesentlicher Vorteil der erfindungsgemäß gefundenen Lösung beruht aber darauf, dass Fehler effizient vermieden werden können. Ein typischer Fehlerfall ist, dass bei dem Auspacken eines Stapels aus der Schrumpffolie oder während der Stapellogistik der Stapelzettel, der die meisten der bedruckstoffrelevanten Daten beinhaltet, verloren geht. Der Bedruckstoffstapel ist dann nicht mehr oder nur unter einem hohen Aufwand zu identifizieren.

Ein weiterer Fehler, der in der Praxis häufig vorkommt, liegt darin, dass aus Unachtsamkeit Beduckstoffstapel in der Druckmaschine verarbeitet werden, die nicht zu einem aktuellen Druckauftrag, der in der Bogendruckmaschine abgearbeitet werden soll, gehören.

Eine korrekte Voreinstellung der Bogendruckmaschine, soweit noch nicht erfolgt, aber auch die korrekte Logistik kann daher mit den Transpondern und den damit verbundenen Datensätzen effizient unterstützt werden. Dazu werden die Bedruckstoffdaten aus dem Datenspeicher der Transponder oder über die ID-Kennung des Transponders aus einer Datenbank ausgelesen. Dazu werden geeignete Lesegeräte eingesetzt, die mittels Funkwellen die Daten oder die ID-Kennung am Transponder auslesen können. Die Lesegeräte können zum Beispiel an den Rollenbahnen eines Logistiksystems oder im Bereich des Bogenanlegers einer Bogendruckmaschine angeordnet sein. Da die Lesereichweite bei geeigneten Transpondern bis zu einem Meter und darüber hinaus betragen kann, kann der Installationsort der Lesegeräte relativ frei gewählt werden.

Wenn ein Druckauftrag in der Druckvorstufe angelegt wurde, werden dessen Daten per Datenleitung oder Datenträger an die Bogendruckmaschine übertragen. An der Bogendruckmaschine können dann noch die benötigten Bedruckstoffe in Form von Bedruckstoffdaten zugeordnet werden. Dann kann die Bogendruckmaschine bei einer fehlerhaften Bestückung mit Bedruckstoffen eine Meldung an den Bediener ausgeben und gegebenenfalls die Bogendruckmaschine stoppen. So wird effizient vermieden, dass nicht dem aktuellen Auftrag zugeordnete Bedruckstoffe verarbeitet werden.

Bei einem Logistiksystem, das die Bedruckstoffstapel mechanisiert der Bogendruckmaschine zuführt, kann die Stapelzuführung vollautomatisch über die Identifikation per Transponder der zu einem Druckauftrag gehörigen Bedruckstoffstapel erfolgen. Bedruckstoffstapel, die sich auf dem Fördersystem zur Bogendruckmaschine befinden, können, sofern sie nicht zu dem gerade kommissionierten Auftrag passend sind, aus dem Pfad zur Druckmaschine, zum Beispiel über eine Weiche, ausgeschleust werden.

Ein weiterer Vorteil ergibt sich aus einer automatisierten Fehlerprotokollierung. Bedruckstoffbögen werden aus verschiedenen Bereichen einer Papier- oder Kartonbahn während der Papier- oder Kartonproduktion herausgetrennt oder eine Bedruckstofflieferung kann an verschiedenen Herstellungsdaten produziert worden sein. Daraus können sich im Einzelnen durchaus unterschiedliche Bedruckstoffeigenschaften ergeben, die unter Anderem die Druckqualität und den Bogentransport innerhalb der Bogendruckmaschine beeinflussen können. Wird ein Bedruckstoffstapel nun über ein Lesegerät per Transponder beim Einsetzen an der Bogendruckmaschine eingebucht, dann sind somit die Stapelkenndaten, wie Produktionsdatum, Herstellungsnummer und Bedruckstoffname bekannt. Folglich kann in Verknüpfung mit diesen Daten ein sehr detailliertes Fehlerprotokoll erstellt werden, indem die Stapelkenndaten mit Daten aus der Maschinensteuerung oder des Leitstandes der Maschine verknüpft werden. Das Fehlerprotokoll ist auf diese Weise für ein Reklamationsgespräch mit dem Bedruckstoffhersteller besten geeignet. Betriebsdaten, die mit den Stapeldaten verknüpft werden können, sind unter anderen Aussagen über die Häufigkeit von Maschinenstopps, maximal erreichbare Fortdruckleistung, aber auch Qualitätsdaten, die aus einer Bogeninspektionsanlage und / oder einer Farbmessanlage gewonnen werden können.

Vorteilhaft ist es auch, die Paletten der Auslegerstapel mit Transpondern auszustatten, die ebenfalls einen Datenspeicher aufweisen oder über eine ID-Kennung eine dem Bedruckstoffstapel zugeordnete Datenspeicherung zulassen. Sinnvolle Daten, die in diesem Datenspeicher hinterlegt werden können, sind unter anderem die Anlaufmakulatur, Maschinenstopps aufgrund von Bogentransportfehlern, oder Stapelbereiche oder einzelne Bögen, die von einer Bogeninspektion oder einem Farbmessgerät als nicht qualitätsgerecht erkannt wurden. Die Abspeicherung dieser Daten kann durch die Angabe der Bogennummer oder durch Stapelbereiche angegeben werden. Vorteilhaft ist die Angabe von Stapelbereichen, da dies das Datenvolumen vermindert. Die Stapelbereiche können als Bogennummern, Bereiche von Bogennummern oder als Höheninformationen angegeben werden, wobei Letztere zum Beispiel durch Angabe der Höhe des Bereichs der betroffenen Bogen gekennzeichnet sind, der von der Palettenkante aus gemessen werden kann.

Die fehlerhaften Bögen in dem Bedruckstoffstapel können dadurch in der Nach- bzw. Weiterverarbeitung, zum Beispiel in einer Bogenstanze, aussortiert bzw. separiert behandelt werden.

Des Weiteren können in dem Datenspeicher des Transponders bzw. über die mit der ID-Kennung des Transponders verbundene Datenbank alle produktrelevanten Daten abgelegt werden, wie zum Beispiel Freigabe- oder Sperrvermerke, die Auftragsbezeichnung und / oder Auftragsnummer des Auftrags, Name des Druckers oder ähnliche produktionsrelevante Daten.

Ein weiterer Vorteil besteht darin, dass nach dem Druck in den meisten Fällen die Bedruckstoffstapel zwischengelagert werden müssen, bevor sie weiterverarbeitet werden können. Oftmals sind die Lagerflächen beschränkt, so dass Bedruckstoffstapel an verschiedenen Orten gelagert werden müssen. Wird der Drucksaal mit mehreren Lesegeräten ausgestattet, die eine Ortung aller zu einem Auftrag zugehörige Bedruckstoffstapel ermöglichen, kann zum Beispiel auf einem Lageplan der Druckerei angezeigt werden, wo die einzelnen Bedruckstoffstapel stehen, die zu einem Auftrag gehören. So wird erreicht, dass alle zu einem Auftrag gehörigen Bedruckstoffstapel aufgefunden werden können, auch wenn sie zwischenzeitlich aus einem beliebigen Grund bewegt wurden.

## Patentansprüche

1. Verfahren zum prozessübergreifenden Datentransfer von an Eigenschaften von Bedruckstoffen und Druckerzeugnissen gebundenen Daten bei einem Bedruckstofftransport in einer Druckerei, bei der Herstellung von bogenförmigen Druckerzeugnissen in Bogendruckmaschinen, wobei der Bedruckstofftransport zu und von einer Bogendruckmaschine zu nachfolgenden Weiterverarbeitungseinheiten auf Transportpaletten aus Metall, Kunststoff oder Holz erfolgt,
**gekennzeichnet dadurch,**
**dass** die Transportpaletten dauerhaft oder lösbar mit wenigstens einem Datenspeicher verbunden sind, wobei in dem Datenspeicher Logistikdaten der Druckerei und Verarbeitungsdaten der Bogendruckmaschine abspeicherbar, aktualisierbar und auslesbar gehalten werden, oder der Datenspeicher auf der Transportpalette eine Identifikationsnummer enthält, der auf einen externen Datenspeicher in einer Datenbank verweist, in dem Logistik- und Verarbeitungsdaten der Bogendruckmaschine gespeichert, aktualisiert und ausgelesen werden,

2. Verfahren nach Anspruch 1,
**gekennzeichnet dadurch,**
**dass** die mit den Transportpaletten verbundenen Datenspeicher automatisch, berührungs- und sichtverbindungsfrei durch Schreib- und Lesegeräte beschrieben und/oder ausgelesen werden, wobei die Schreib- und Lesegeräte auf dem Pfad der Bedruckstoffzuführung zur Bogendruckmaschine, im Bereich eines Bogenanlegers und/oder eines Bogenauslegers der Bogendruckmaschine installiert sind,

3. Verfahren nach Anspruch 1,
**gekennzeichnet dadurch,**
**dass** der Datenspeicher auf der Transportpalette oder der über die Identifikationsnummer adressierbare Datenspeicher in einer externen Datenbank bedruckstoffrelevante Daten, wie Bedruckstoffformat, Bedruckstoffdicke, Bedruckstoffsorte und ähnliche Bedruckstoff beschreibende Daten enthält, diese Daten direkt oder indirekt durch eine Lesegerät im Bereich des Bogenanlegers ausgelesen werden und die den Bedruckstoff beschreibenden Daten dazu genutzt werden, vom Bedruckstoffformat oder der Bedruckstoffdicke abhängige Voreinstellungen an der Bogendruckmaschine vorzunehmen,

4. Verfahren nach Anspruch 1 und 3,
**gekennzeichnet dadurch,**
**dass** die den Bedruckstoff beschreibenden Daten oder eine Teilmenge davon mit einen Druckauftrag betreffenden Daten abgeglichen werden, die in den Auftragsdaten, zum Beispiel in dem Maschinenleitstand der Bogendruckmaschine oder in einer externen Datenbank, hinterlegt sind, so dass bei Abweichungen zwischen den Daten eine Meldung an den Bediener der Maschine, zum Beispiel über den Maschinenleitstand, ausgegeben und/oder der Betrieb der Bogendruckmaschinen gestoppt wird.

5. Verfahren nach Anspruch 1,
**gekennzeichnet, dadurch**
**dass** im Bogenausleger einer Bogendruckmaschine die Produktion eines Druckauftrages betreffende Daten in die Datenspeicher abgelegt werden, die mit den Transportpaletten verbunden sind bzw. in einer Datenbank abgelegt werden, die über die Identifikationsnummer des Datenspeichers indexiert wird.

6. Verfahren nach Anspruch 5,
**gekennzeichnet dadurch,**
**dass** es sich bei den Produktionsdaten um Qualitätsdaten handelt, die aus einem Bogeninspektionsgerät und/oder einer Farbregelanlage stammen und die Bereiche von Bogen im Bogenstapel oder einzelnen Bogen bezeichnen, derart dass die so **gekennzeichnet**en Bogen in einem nachfolgenden Prozessschritt separiert werden können,

7. Verfahren nach Anspruch 5,
**gekennzeichnet dadurch,**
**dass** es sich bei den Daten um Produktionsdaten handelt, die aus der Maschinensteuerung gewonnen werden und die Anlaufdaten, Fortdruckleistungen, Maschineneinstellungen und/oder Ort und Zeitpunkt von Produktionsunterbrechungen betreffen.

8. Verfahren nach Anspruch 1, 3 und 5,
**gekennzeichnet dadurch,**
**dass** mittels der gespeicherten Daten automatisiert ein Fehlerprotokoll erstellt wird, wobei Bedruckstoffdaten und Produktionsdaten und Qualitätsdaten miteinander verknüpft werden.

9. Verfahren nach Anspruch 1 bis 8,
**gekennzeichnet dadurch,**
**dass** die Datenspeicher zur Ortung einzelner auf den Transportpaletten gelagerter Bedruckstoffstapel in dem Drucksaal oder in dem Logistikbereich der Druckerei verwendet werden, indem sie vorzugsweise durch mehre verteilte Lesegeräte geortet werden und der Lagerort auf einem Display dargestellt wird bzw. der Lagerort alphanumerisch auf einem Ausgabegerät angegeben wird.

10. Verfahren nach Anspruch 1 bis 9,
**gekennzeichnet dadurch,**
**dass** von den mit den Transportpaletten verbundenen Datenspeichern Daten von und zu einem Produktionsmanagementsystem übertragen werden.

11. Verfahren nach Anspruch 1 bis 10,
**gekennzeichnet dadurch,**
**dass** es sich bei dem Datenspeicher um einen Transponder handelt,

12. Verfahren nach Anspruch 11,
**gekennzeichnet dadurch,**
**dass** der Transponder als ein RFID-Tag oder ein Smart Label ausgestaltet ist.
